# EUROPEAN PATENT APPLICATION

(11) **EP 2 312 814 A2**
(43) Date of publication of application: **20.04.2011**
(21) Application number: 10007802.1
(22) Date of filing: 27.07.2010
(51) Int. Cl.: H04M 1/725

(54) **Method for attaching data and mobile terminal thereof**

(30) Priority: 16.10.2009 KR 20090098880
(71) Applicant: LG ELECTRONICS INC., Yeongdeungpo-gu Seoul 150-721 (KR)
(72) Inventor: Ryu, Jaehyung, Seoul 153-801 (KR)
(74) Representative: TER MEER - STEINMEISTER & PARTNER GbR

(57) **Abstract**

A method for attaching data and a mobile terminal thereof comprise: displaying a text message input window; generating a first slide and a second slide included with a text inputted through the text message input window; displaying data and selecting data to be attached to the slides among the displayed data; and matching one by one to the first slide and the second slide according to an order of the selected data and automatically attaching the data.

## Description

### BACKGROUND

The following description relates to a method for attaching data and a mobile terminal thereof, capable of allowing a user to easily attach data.

Typically, a terminal may be classified into two types based on mobility, that is, a mobile/portable terminal and stationary terminal. The mobile/portable terminal may be further classified into two types based on personal portability, that is, a handheld terminal and a vehicle mount terminal.

With such diverse functions, the terminal is evolving into a comprehensive multimedia device that can support various operations, such as capturing images or videos, reproducing music or video files, allowing a user to play games and receiving broadcast contents.

In order to implement complex functions, hardware and/or software implementations are being developed. For example, as the function of text message transmission is increasingly used being attached with a data, a method of attaching a data by a user in transmission of text message is greatly demanded.

### SUMMARY

The present disclosure is intended to solve the aforementioned disadvantage and to provide a method for attaching data and mobile terminal thereof, capable of allowing a user to easily attach data.

One general aspect of the present general inventive concept may be achieved by a method for attaching data to a mobile terminal, comprising: displaying a text message input window; generating a first slide and a second slide included a text inputted through the text message input window; displaying data and selecting data to be attached to the slides among the displayed data; and matching one by one to the first slide and the second slide according to an order of the selected data and automatically attaching the data.

In some exemplary embodiments, the step of generating the first slide and the second slide included with a text inputted through the text message input window may comprise a step of generating the first slide including a message inputted before the input of a generated signal and the second slide including a message to be inputted after the input of the generated signal in a case the generated signal for generating the second slide is inputted via a user input unit.

In some exemplary embodiments, the step of generating the first slide and the second slide included with a text inputted through the text message input window may comprise: determining whether capacity of a message inputted through the text message input window has exceeded a predetermined capacity; and generating the first slide including a message within the predetermined capacity and the second slide including the message exceeding the predetermined capacity if it is determined that the capacity of the message inputted through the text message input window has exceeded the predetermined capacity.

In some exemplary embodiments, the step of generating the first slide including a text inputted through the text message input window and the second slide may comprise a step of discriminatively displaying the first slide and the second slide.

In some exemplary embodiments, the step of discriminatively displaying the first slide and the second slide may include a step of using at least one of a text, a line, a figure and an icon and displaying the same.

In some exemplary embodiments, the step of discriminatively displaying the first slide and the second slide may include displaying only part of the message included in the first slide.

In some exemplary embodiments, the step of discriminatively displaying the first slide and the second slide may comprise steps of: displaying a slide message for displaying the first slide and a display window including only part of the message included in the first slide; and displaying all messages included in the first slide in a case the display window is selected.

In some exemplary embodiments, the step of, in case the predetermined capacity is exceeded, generating the first slide including a message within the predetermined capacity and a second slide including the message exceeding the predetermined capacity may include displaying on the text message input window a scroll bar for displaying a position of a message that is inputted and at least one of progressive bars for displaying capacity of message currently prepared out of a total message capacity.

In some exemplary embodiments, the method for attaching data to a portable terminal may further comprise changing an attached data in response to the changed signal and attaching the data in a case the changed signal for changing the attached data is inputted.

One another general aspect of the present general inventive concept may be achieved by a mobile terminal, comprising: a display unit configured to display a text message input window; and a controller configured to generate a first slide included with a text inputted through the text message input window and a second slide; and to automatically attach the text by matching one by one the text to the first slide and the second slide according to an order of selected data in a case the data is displayed and a data to be attached out of the displayed data is selected.

In some exemplary embodiments, the controller may discriminatively display the first slide from the second slide.

In some exemplary embodiments, the controller may display on the display unit data icons representing the selected data and an attached file window corresponding to the slide, and attach the data to the corresponding slide in response to a touch and drop signal relative to the data icons.

As a result, there is an advantage in the method for attaching data and mobile terminal thereof thus explained according to the present disclosure in that a user may easily attach data when transmitting a text message.

### BRIEF DESCRIPTION OF DRAWINGS

FIG. 1 is a block diagram of a mobile terminal according to one exemplary embodiment of the present disclosure.
FIG. 2A is a front perspective view of a mobile terminal according to one exemplary embodiment of the present disclosure.
FIG. 2B is a rear perspective view of a mobile terminal according to one exemplary embodiment of the present disclosure.
FIG. 3 is a flowchart for explaining a data attaching method according to one exemplary embodiment of the present disclosure.
FIG. 4 is a schematic image view illustrating a first exemplary embodiment according to a data attaching method in a mobile terminal of the present disclosure.
FIG. 5 is a schematic image view illustrating a second exemplary embodiment according to a data attaching method in a mobile terminal of the present disclosure.
FIG. 6 is a schematic image view illustrating a third exemplary embodiment according to a data attaching method in a mobile terminal of the present disclosure.
FIG. 7 is a schematic image view illustrating a fourth exemplary embodiment according to a data attaching method in a mobile terminal of the present disclosure.

### DETAILED DESCRIPTION

A mobile terminal related to the present disclosure will be described in detail with reference to the accompanying drawings.

The suffixes 'module', 'unit' and 'part' may be used for elements in order to facilitate the disclosure. Significant meanings or roles may not be given to the suffixes themselves and it is understood that the 'module', 'unit' and 'part' may be used together or interchangeably.

Exemplary embodiments of the present disclosure may be applicable to various types of terminals. Examples of such terminals may include mobile terminals as well as stationary terminals, such as mobile phones, user equipment, smart phones, DTV, computers, digital broadcast terminals, personal digital assistants, portable multimedia players (PMP) and/or navigators.

A further description may be provided with regard to a mobile terminal, although such teachings may apply equally to other types of terminals.

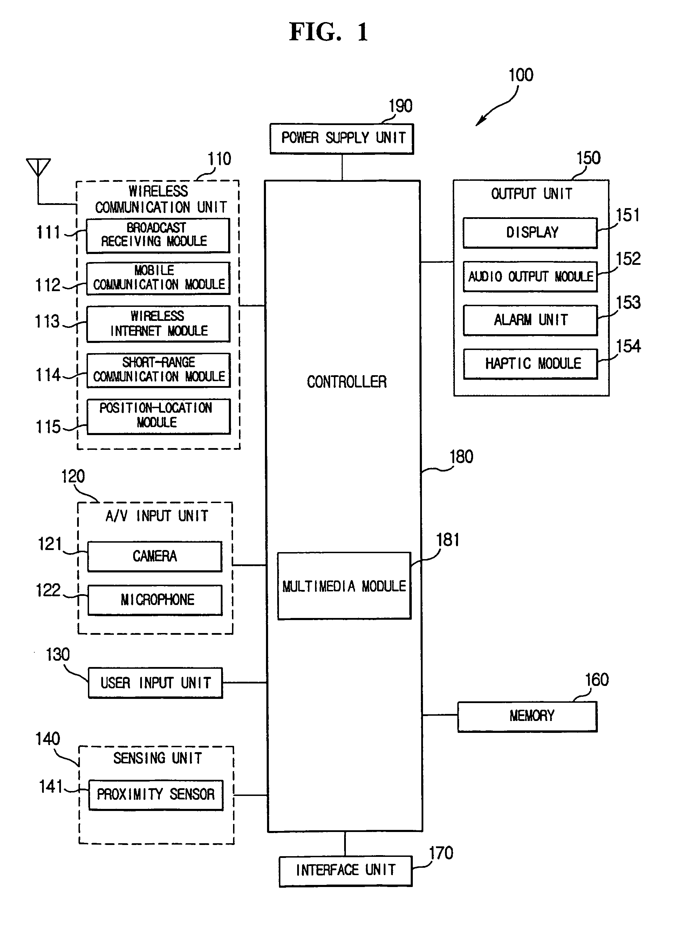

FIG. 1 is a block diagram of a mobile terminal in accordance with an example embodiment. Other embodiments and arrangements may also be provided. FIG. 1 shows a mobile terminal 100 having various components, although other components may also be used. More or less components may alternatively be implemented.

FIG. 1 shows that the mobile terminal 100 includes a wireless communication unit 110, an audio/video (A/V) input unit 120, a user input unit 130, a sensing unit 140, an output unit 150, a memory 160, an interface unit 170, a controller 180 and a power supply 190.

The wireless communication unit 110 may be configured with several components and/or modules. The wireless communication unit 110 may include a broadcast receiving module 111, a mobile communication module 112, a wireless Internet module 113, a short-range communication module 114 and a position-location module 115. The wireless communication unit 110 may include one or more components that permit wireless communication between the mobile terminal 100 and a wireless communication system or a network within which the mobile terminal 100 is located. In case of non-mobile terminals, the wireless communication unit 110 may be replaced with a wire communication unit. The wireless communication unit 110 and the wire communication unit may be commonly referred to as a communication unit.

The broadcast receiving module 111 may receive a broadcast signal and/or broadcast associated information from an external broadcast managing entity via a broadcast channel. The broadcast channel may include a satellite channel and a terrestrial channel. The broadcast managing entity may refer to a system that transmits a broadcast signal and/or broadcast associated information.

At least two broadcast receiving modules 111 may be provided in the mobile terminal 100 to pursue simultaneous reception of at least two broadcast channels or facilitation of broadcast channel switching.

Examples of broadcast associated information may include information associated with a broadcast channel, a broadcast program, a broadcast service provider, etc. For example, broadcast associated information may include an electronic program guide (EPG) of digital multimedia broadcasting (DMB) and an electronic service guide (ESG) of digital video broadcast-handheld (DVB-H).

The broadcast signal may be a TV broadcast signal, a radio broadcast signal, and/or a data broadcast signal. The broadcast signal may further include a broadcast signal combined with a TV or radio broadcast signal.

The broadcast receiving module 111 may receive broadcast signals transmitted from various types of broadcast systems. As a non-limiting example, the broadcasting systems may include digital multimedia broadcasting-terrestrial (DMB-T), digital multimedia broadcasting-satellite (DMB-S), digital video broadcast-handheld (DVB-H), a data broadcasting system known as media forward link only (MediaFLO®) and integrated services digital broadcast-terrestrial (ISDB-T). The receiving of multicast signals may also be provided. Data received by the broadcast receiving module 111 may be stored in the memory 160, for example.

The mobile communication module 112 may communicate wireless signals with one or more network entities (e.g. a base station or Node-B). The signals may represent audio, video, multimedia, control signaling, and data, etc.

The wireless Internet module 113 may support Internet access for the mobile terminal 100. This wireless Internet module 113 may be internally or externally coupled to the mobile terminal 100. Suitable technologies for wireless Internet may include, but are not limited to, WLAN (Wireless LAN)(Wi-Fi), Wibro (Wireless broadband), Wimax (World Interoperability for Microwave Access), and/or HSDPA (High Speed Downlink Packet Access). The wireless Internet module 113 may be replaced with a wire Internet module in non-mobile terminals. The wireless Internet module 113 and the wire Internet module may be referred to as an Internet module.
The short-range communication module 114 may facilitate short-range communications. Suitable technologies for short-range communication may include, but are not limited to, radio frequency identification (RFID), infrared data association (IrDA), ultra-wideband (UWB), as well as networking technologies such as Bluetooth and ZigBee.

The position-location module 115 may identify or otherwise obtain a location of the mobile terminal 100. The position-location module 115 may be provided using global positioning system (GPS) components that cooperate with associated satellites, network components, and/or combinations thereof.

The position-location module 115 may precisely calculate current 3-dimensional position information based on longitude, latitude and altitude by calculating distance information and precise time information from at least three satellites and then by applying triangulation to the calculated information. Location and time informations may be calculated using three satellites, and errors of the calculated location position and time informations may then be amended or changed using another satellite. The position-location module 115 may calculate speed information by continuously calculating a real-time current location.

The audio/video (A/V) input unit 120 may provide audio or video signal input to the mobile terminal 100. The A/V input unit 120 may include a camera 121 and a microphone 122. The camera 121 may receive and process image frames of still pictures and/or video.

The microphone 122 may receive an external audio signal while the mobile terminal is in a particular mode, such as a phone call mode, a recording mode and/or a voice recognition mode. The received audio signal may then be processed and converted into digital data.

The mobile terminal 100, and in particular the A/V input unit 120, may include a noise removing algorithm (or noise canceling algorithm) to remove noise generated in the course of receiving the external audio signal. Data generated by the A/V input unit 120 may be stored in the memory 160, utilized by the output unit 150, and/or transmitted via one or more modules of the wireless communication unit 110. Two or more microphones and/or cameras may also be provided.

The user input unit 130 may generate input data responsive to user manipulation of an associated input device or devices. Examples of such devices may include a keypad, a dome switch, a touchpad (e.g., static pressure/capacitance), a jog wheel and/or a jog switch. A specific example is one in which the user input unit 130 is configured as a touchpad in cooperation with a display, as will be described below.

The sensing unit 140 may provide status measurements of various aspects of the mobile terminal 100. For example, the sensing unit 140 may detect an open/close status (or state) of the mobile terminal 100, a relative positioning of components (e.g., a display and a keypad) of the mobile terminal 100, a change of position of the mobile terminal 100 or a component of the mobile terminal 100, a presence or absence of user contact with the mobile terminal 100, and/or an orientation or acceleration/deceleration of the mobile terminal 100.

The mobile terminal 100 may be configured as a slide-type mobile terminal. In such a configuration, the sensing unit 140 may sense whether a sliding portion of the mobile terminal 100 is open or closed. The sensing unit 140 may also sense presence or absence of power provided by the power supply 190, presence or absence of a coupling or other connection between the interface unit 170 and an external device, etc.

The sensing unit 140 may include a proximity sensor 141.

The output unit 150 may generate an output relevant to a sight sense, an auditory sense, a tactile sense and/or the like. The output unit 150 may include a display 151, an audio output module 152, an alarm 153, a haptic module 154 and/or the like.

The display 151 may display (output) information processed by the terminal 100. For example, in case that the terminal is in a call mode, the display 151 may display a user interface (UI) or a graphic user interface (GUI) associated with the call. If the mobile terminal 100 is in a video communication mode or a photograph mode, the display 151 may display a photographed and/or received picture, a UI or a GUI.

The display 151 may include at least one of a liquid crystal display (LCD), a thin film transistor liquid crystal display (TFT LCD), an organic light-emitting diode (OLED), a flexible display, and a 3-dimensional display.

The display 151 may have a transparent or light-transmissive type configuration to enable an external environment to be seen through. This may be called a transparent display. A transparent OLED (TOLED) may be an example of a transparent display. A backside structure of the display 151 may also have the light-transmissive type configuration. In this configuration, a user may see an object located behind the terminal body through the area occupied by the display 151 of the terminal body.

At least two displays 151 may also be provided. For example, a plurality of displays may be provided on a single face of the terminal 100 by being built in one body or spaced apart from the single face. Alternatively, each of a plurality of displays may be provided on different faces of the terminal 100.

If the display 151 and a sensor for detecting a touch action (hereafter a touch sensor) are constructed in a mutual-layered structure (hereafter a touchscreen), the display 151 may be used as an input device as well as an output device. For example, the touch sensor may include a touch film, a touch sheet, a touchpad and/or the like.

The touch sensor may convert a pressure applied to a specific portion of the display 151 or a variation of electrostatic capacity generated from a specific portion of the display 151 to an electric input signal. The touch sensor may detect a pressure of a touch as well as a position and size of the touch.

If a touch input is provided to the touch sensor, signal(s) corresponding to the touch input may be transferred to a touch controller. The touch controller may process the signal(s) and then transfer corresponding data to the controller 180. The controller 180 may therefore know which portion of the display 151 is touched.

FIG. 1 shows that the proximity sensor 141 can be provided within the mobile terminal 100 enclosed by the touchscreen or around the touchscreen. The proximity sensor 141 may detect a presence or non-presence of an object approaching a prescribed detecting surface or an object existing around the proximity sensor 141 using an electromagnetic field strength or infrared ray without mechanical contact. The proximity sensor 141 may have a longer durability than the contact type sensor and may also have a greater usage than the contact type sensor.

The proximity sensor 141 may include one of a transmissive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and/or the like. If the touchscreen is an electrostatic type, the proximity sensor 141 may detect proximity of a pointer using a variation of an electric field according to the proximity of the pointer. In this case, the touchscreen (touch sensor) may be classified into the proximity sensor.

For convenience sake, an action in which a pointer approaches the touchscreen without contacting the touchscreen may be called a proximity touch. An action in which a pointer actually touches the touchscreen may be called a contact touch. The location of the touchscreen proximity-touched by the pointer may be the position of the pointer that vertically opposes the touchscreen when the pointer performs the proximity touch.

The proximity sensor 141 may detect a proximity touch and/or a proximity touch pattern (e.g., a proximity touch distance, a proximity touch duration, a proximity touch position, a proximity touch shift state, etc.). Information corresponding to the detected proximity touch action and/or the detected proximity touch pattern may be outputted to the touchscreen.

The audio output module 152 may output audio data that is received from the wireless communication unit 110 in a call signal reception mode, a call mode, a recording mode, a voice recognition mode, a broadcast receiving mode and/or the like. The audio output module 152 may output audio data stored in the memory 160. The audio output module 152 may output an audio signal relevant to a function (e.g., a call signal receiving sound, a message receiving sound, etc.) performed by the mobile terminal 100. The audio output module 152 may include a receiver, a speaker, a buzzer and/or the like.

The alarm 153 may output a signal for announcing an event occurrence of the mobile terminal 100. An event occurring in the mobile terminal 100 may include one of a call signal reception, a message reception, a key signal input, a touch input and/or the like. The alarm 153 may output a signal for announcing an event occurrence by way of vibration or the like as well as a video signal or an audio signal. The video signal may be outputted via the display 151. The audio signal may be outputted via the audio output module 152. The display 151 or the audio output module 152 may be classified as part of the alarm 153.

The haptic module 154 may bring about various haptic effects that can be sensed by a user. Vibration is a representative example for the haptic effect brought about by the haptic module 154. Strength and pattern of the vibration generated from the haptic module 154 may be controllable. For example, vibrations differing from each other may be outputted in a manner of being synthesized together or may be sequentially outputted.
The haptic module 154 may generate various haptic effects including a vibration, an effect caused by such a stimulus as a pin array vertically moving against a contact skin surface, a jet power of air via outlet, a suction power of air via inlet, a skim on a skin surface, a contact of an electrode, an electrostatic power and the like, and/or an effect by hot/cold sense reproduction using an endothermic or exothermic device as well as the vibration.

The haptic module 154 may provide the haptic effect via direct contact. The haptic module 154 may enable a user to experience the haptic effect via muscular sense of a finger, an arm and/or the like. Two or more haptic modules 154 may be provided according to a configuration of the mobile terminal 100.

The memory 160 may store a program for operations of the controller 180. The memory 160 may temporarily store input/output data (e.g., phonebook, message, still picture, moving picture, etc.). The memory 160 may store data of vibration and sound in various patterns outputted in case of a touch input to the touchscreen.

The memory 160 may include at least one of a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory, a programmable read-only memory, a magnetic memory, a magnetic disk, an optical disk, and/or the like. The mobile terminal 100 may operate in association with a web storage that performs a storage function of the memory 160 in the Internet.

The interface unit 170 may play a role as a passage to external devices connected to the mobile terminal 100. The interface unit 170 may receive data from an external device. The interface unit 170 may be supplied with a power and then the power may be delivered to elements within the mobile terminal 100. The interface unit 170 may enable data to be transferred to an external device from an inside of the mobile terminal 100. The interface unit 170 may include a wire/wireless headset port, an external charger port, a wire/wireless data port, a memory card port, a port for coupling to a device having an identity module, an audio input/output (I/O) port, a video input/output (I/O) port, an earphone port and/or the like.

The identity module may be a chip or card that stores various kinds of information for authenticating use of the mobile terminal 100. The identify module may include a user identity module (UIM), a subscriber identity module (SIM), a universal subscriber identity module (USIM) and/or the like. A device provided with the above identity module (hereafter an identity device) may be manufactured in the form of a smart card. The identity device may be connected to the mobile terminal 100 via the port.

The interface unit 170 may play a role as a passage for supplying a power to the mobile terminal 100 from a cradle that is connected to the mobile terminal 100. The interface unit 170 may play a role as a passage for delivering various command signals, which are inputted from the cradle by a user, to the mobile terminal 100. Various command signals inputted from the cradle or the power may work as a signal for recognizing that the mobile terminal 100 is correctly loaded in the cradle.

The controller 180 may control overall operations of the mobile terminal 100. For example, the controller 180 may perform control and processing relevant to a voice call, a data communication, a video conference and/or the like. The controller 180 may have a multimedia module 181 for multimedia playback. The multimedia module 181 may be implemented within the controller 180 or may be configured separate from the controller 180.

The controller 180 may perform pattern recognizing processing for recognizing a handwriting input performed on the touchscreen as a character an/or recognizing a picture drawing input performed on the touchscreen as an image.

The power supply 190 may receive an external or internal power and then supply the power required for operations of the respective elements under control of the controller 180.

Exemplary embodiments of the present disclosure explained in the following description may be implemented within a recording medium that can be read by a computer or a computer-like device using software, hardware or combination thereof.

According to the hardware implementation, arrangements and embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors and electrical units for performing other functions. In some cases, exemplary embodiments may be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in memory such as the memory 160, and may be executed by a controller or processor, such as the controller 180.

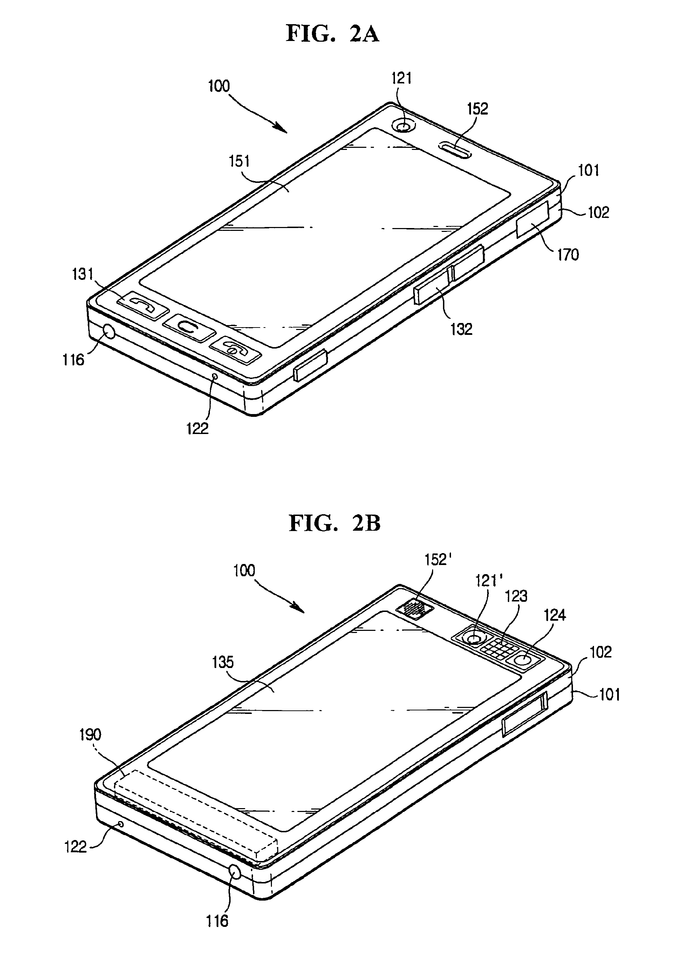

FIG. 2A is a front perspective view of a mobile terminal according to one exemplary embodiment of the present disclosure. Other embodiments, configurations and arrangements may also be provided.

As shown in FIG. 2A, the mobile terminal 100 may include a bar type terminal body. Embodiments of the mobile terminal may be implemented in a variety of different configurations. Examples of such configurations may include a folder-type, a slide-type, a bar-type, a rotational-type, a swing-type and/or combinations thereof.

The body may include a case (casing, housing, cover, etc.) that forms an exterior of the terminal. The case may be divided into a front case 101 and a rear case 102. Various electric/electronic parts may be provided in a space between the front case 101 and the rear case 102. A middle case may be further provided between the front case 101 and the rear case 102.

The cases may be formed by injection molding of synthetic resin or may be formed of metal substance such as stainless steel (STS), titanium (Ti) or the like, for example.

The display 151, the audio output unit 152, the camera 121, user input units 130/131/132, the microphone 122, the interface unit 170 and the like may be provided on the terminal body, and more particularly on the front case 101.

The display 151 may occupy most of a main face of the front case 101. The audio output module 152 and the camera 121 may be provided at an area adjacent to one end portion of the display 151, while the user input unit 131 and the microphone 122 may be provided at another area adjacent to the other end portion of the display 151. The user input unit 132 and the interface unit 170 may be provided on lateral sides of the front and rear cases 101 and 102.

The user input unit 130 may receive a command for controlling an operation of the mobile terminal 100. The user input unit 130 may include a plurality of manipulating units 131 and 132. The manipulating units 131 and 132 may be called a manipulating portion and may adopt any mechanism of a tactile manner that enables a user to perform a manipulation action by experiencing a tactile feeling.

Content inputted by the first manipulating unit 131 or the second manipulating unit 132 may be diversely set. For example, a command such as start, end, scroll and/or the like may be inputted to the first manipulating unit 131. A command for a volume adjustment of sound outputted from the audio output unit 152, a command for a switching to a touch recognizing mode of the display 151 or the like may be inputted to the second manipulating unit 132.

FIG. 2B is a perspective diagram of a backside of the mobile terminal shown in FIG. 2A. Other embodiments, configurations and arrangements may also be provided.

As shown in FIG. 2B, a camera 121' may be additionally provided on a backside of the terminal body, and more particularly on the rear case 102. The camera 121' may have a photographing direction that is substantially opposite to a photographing direction of the camera 121 (shown in FIG. 2A) and may have pixels differing from pixels of the camera 121.

For example, the camera 121 may have a lower number of pixels to capture and transmit a picture of user's face for a video call, while the camera 121' may have a greater number of pixels for capturing a general subject for photography without transmitting the captured subject. Each of the cameras 121 and 121' may be installed on the terminal body to be rotated and/or popped up.

A flash 123 and a mirror 124 may be additionally provided adjacent to the camera 121'. The flash 123 may project light toward a subject in case of photographing the subject using the camera 121'. If a user attempts to take a picture of the user (self-photography) using the camera 121', the mirror 124 may enable the user to view a user's face reflected by the mirror 124.

An additional audio output unit 152' may be provided on the backside of the terminal body. The additional audio output unit 152' may implement a stereo function together with the audio output unit 152 shown in FIG. 2A and may be used for implementation of a speakerphone mode in talking over the terminal.

A broadcast signal receiving antenna 116 may be additionally provided at the lateral side of the terminal body as well as an antenna for communication or the like. The antenna 116 may be considered a portion of the broadcast receiving module 111 shown in FIG. 1 and may be retractably provided on the terminal body.

The power supply 190 for supplying a power to the mobile terminal 100 may be provided to the terminal body. The power supply 190 may be built within the terminal body. Alternatively, the power supply 190 may be detachably connected to the terminal body.

FIG. 2B also shows a touchpad 135 for detecting a touch that is additionally provided on the rear case 102. The touchpad 135 may be configured in a light transmittive type like the display 151. If the display 151 outputs visual information from both faces, the display 151 may recognize visual information via the touchpad 135 as well. The information outputted from both of the faces may be controlled by the touchpad 135. Alternatively, a display may be further provided to the touchpad 135 so that a touchscreen may also be provided to the rear case 102.

The touchpad 135 may be activated by interconnecting with the display 151 of the front case 101. The touchpad 135 may be provided in rear of the display 151 in parallel to one another. The touchpad 135 may have a size equal to or less than a size of the display 151.

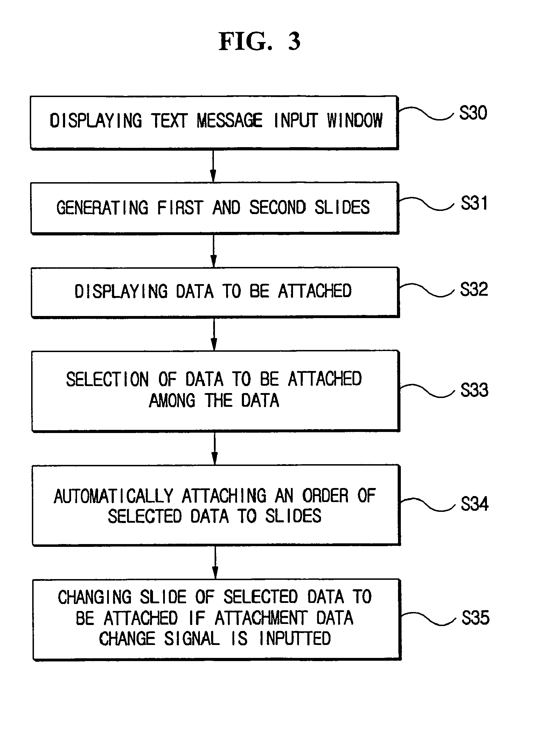

FIG.3 is a flowchart for explaining a data attaching method according to one exemplary embodiment of the present disclosure.

In a case a user inputs a signal for transmitting a message, the controller 180 displays a text message input window on the display unit 151 (S30). The text message input window may include a text input window, a data attachment window and the like.

A user uses the user input unit 130 to input the message to the text message input window. Then, the controller 180 generates a first slide and a second slide including texts inputted through the text message input window (S31).

For example, in a case the user inputs a generation signal for generating the second slide through the user input unit 130, the controller 180 generates the first slide including the message inputted before the generation signal is inputted, and the second slide including a message to be inputted after the generation signal is inputted.

At this time, the generation signal may be generated through a generation icon, a generation menu, an exclusive input key and the like. As another example, the controller 180 determines whether capacity of message inputted through the text message input window exceeds the predetermined capacity. If the capacity of message inputted through the text message input window exceeds the predetermined capacity, the controller 180 generates a first slide including a message within the predetermined capacity and a second slide exceeding the predetermined capacity.

That is, if the predetermined capacity is 100 bytes, the controller 180 puts a message within the 100 bytes in the inputted messages into the first slide, and puts a message exceeding the 100 bytes into the second slide.
The slides include messages sendable at one time during text message transmission ('base of fee imposition') and attached message. The predetermined capacity may be set up by a user or a manufacturer. In a case a display signal for displaying data is inputted, the controller 180 extracts the stored data from the memory 160 to select a data to be attached to the slides out of displayed data using the user input unit 130 (S33).

Successively, the controller 180 automatically attaches the data to the first slide and the second slide in the order of selected data by matching one by one (S34). The controller 180 displays the text message input window and attachment file window on the display 151. The attachment file window may include the selected data. In a case the user inputs a data change signal for changing a slide of selected data to be attached, the controller 180 changes the slide of attached data to be attached according to the data change signal (S35).

As a result, the user can easily attach data as much as possible when messages are transmitted.

Although the present exemplary embodiment has explained the data attachment method using two slides, the embodiment is not limited thereto but many more slides may be used as a matter-of-factly.

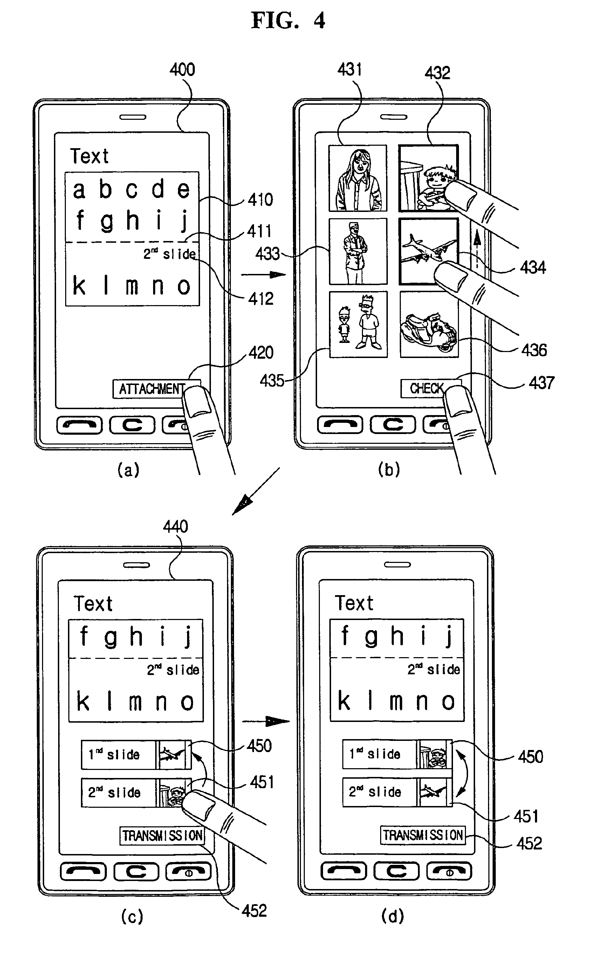

FIG.4 is a schematic image drawing illustrating a first exemplary embodiment according to a data attaching method in a mobile terminal of the present disclosure.

FIG.4a is a schematic view illustrating a text message input window 400 displayed during message transmission.

The text message input window 400 may include a text input window 410 and an attachment icon 420. Hereinafter, although description will be given based on use of the attachment icon 420 by a user when data is attached to slides, the description is not limited thereto, but attachment-only key, an attachment menu and the like may be used.
A user who attaches data uses the user input unit 130 to input messages through the text input window 410. Then, the controller 180 generates a first slide and a second slide including texts inputted through the text message window. The controller 180 also uses one of a text, a line, a figure and an icon to distinguishingly display the first slide and the second slide.

That is, the controller 180 further display on the text input window 410 a line 411 and a text 412 for distinguish the first slide from the second slide. As a result, the user can easily grasp the change of slides.

As illustrated in FIG.3, the first slide and the second slide may be generated based on whether the generated signal has been inputted through the user input unit or whether the prescribed capacity has been exceeded.

Next, in a case the user selects the attachment icon 420, the controller 180 extracts the stored data from the memory 160 and displays the data on the display 151 (see FIG.4b). The data is an image data but it is not limited thereto.

Then, the user uses the user input unit 130 to select data to be attached out of the displayed data 431, 432, 433, 434, 435, 436 and selects an identity icon 437. Then, the controller 180 automatically attaches the data to the first slide and the second slide in the order of selected data by matching one by one. The controller 180 displays the text message input window attached with data on the display 151 (see FIG.4c). The text message input window 440 may include attachment file windows 450, 451.

The attachment file window 450 is attached with the data 434, and the attachment file window 451 is attached with the data 432.

Successively, in a case the user touch-and-drops the attached data to the attachment file window 450 ('data change signal'), the controller 180 changes the slide to be attached with data 432 and the data 434 (see FIG.4d). That is, the attachment file window 450 is attached with the data 432, and the attachment file window 451 is attached with the data 434. As a result, the user can easily attach the data to be attached during text message transmission. Furthermore, the user can easily grasp the changed slides according to the capacity of text message.

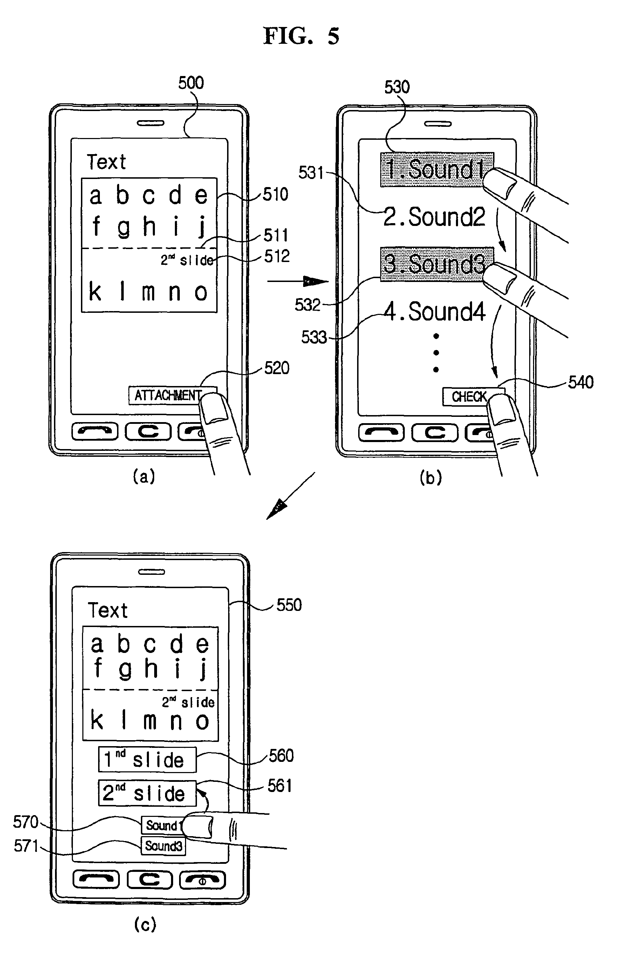

FIG. 5 is a schematic image drawing illustrating a second exemplary embodiment according to a data attaching method in a mobile terminal of the present disclosure.

FIG.5a illustrates a text message input window 500 to be displayed when messages are transmitted. The text message input window 500 may include a text input window 510 and an attachment icon 520. Furthermore, the text message input window 500 may include a line 511 and a text 512 for distinguishing the first slide from the second slide.

Next, in a case the user selects the attachment icon 520, the controller 180 extracts the stored data in the memory 160 and displays the data on the display 151 (see FIG.5b). At this time, the data is a music data but it is not limited thereto. Successively, in a case the user uses the user input unit 130 to select music data 530, 532 to be attached out of displayed data 530, 531, 532, 533 and selects an identity icon 540.

Then, the controller 180 displays a text message input window 550 on the display 151 (see FIG.5c). The text message input window 550 may include icons 570, 571 representing the selected music data 530, 532 and attachment file windows 560, 561. In a case the user touch-and-drops one of the icons 570 among the icons on to the attachment file window 561, the controller 180 attaches the music data 530 corresponding to the icon 570 to the second slide.

As another example, in a case the user selects the identity icon 540, the controller 180 displays a slide menu capable of selecting slides on the display 151. Then, the user uses the slide menu and attaches the data on the desired slide. As a result, the user can easily attach the data on his or her desired slide.

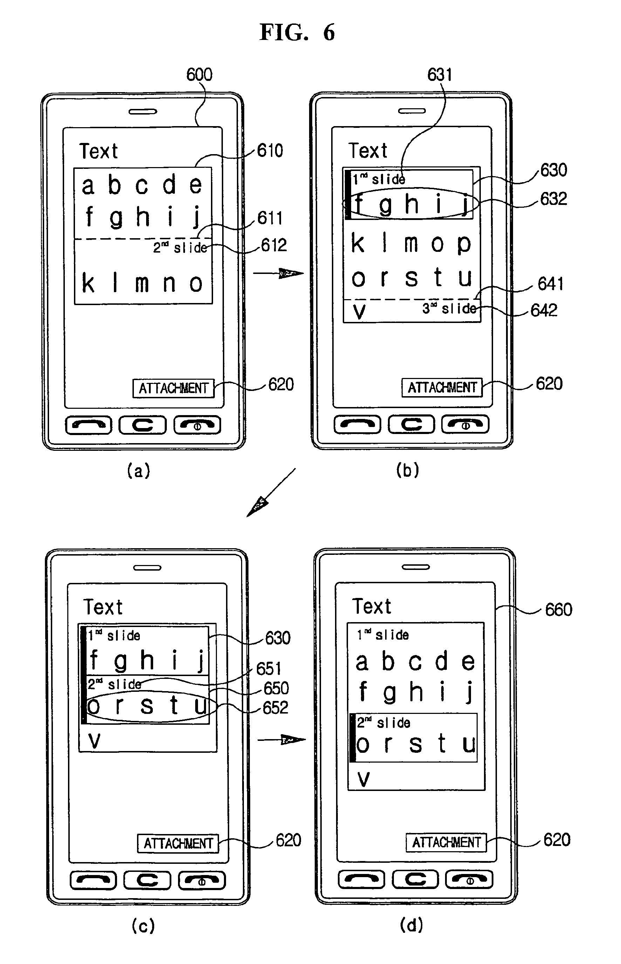

FIG.6 is a schematic image drawing illustrating a third exemplary embodiment according to a data attaching method in a mobile terminal of the present disclosure.

FIG.6a illustrates a text message input window 600 to be displayed when messages are transmitted. The text message input window 600 may include a text input window 610 and an attachment icon 620. The user uses the user input unit 130 to input messages through the text input window 610. Then, the controller 180 determines whether capacity of message inputted through the text message input window 610 exceeds a predetermined capacity. If the capacity of message inputted through the text message input window 610 exceeds the predetermined capacity, the controller 180 generates displays on the text message input window 600 a line 611 and a text 612 for distinguishing the first slide from the second slide.

The controller 180 simultaneously or sequentially displays on the display 151 a slide message 631 for displaying the first slide and a display window 630 including only part 632 of the messages included in the first slide (see FIG.6b). Successively, the user uses the user input unit 130 to further input messages through the text input window 610.

Then, the controller 180 determines whether capacity of message inputted through the text message input window 610 exceeds a predetermined capacity. If the capacity of message inputted through the text message input window 610 exceeds a predetermined capacity, the controller 180 further display a line 641 and a text 642 on the text message input window 600 for distinguishing the first slide from the second slide. The controller 180 simultaneously or sequentially displays on the display 151 a slide message 651 for displaying the second slide and a display window 650 including only part 652 of the messages included in the second slide (see FIG.6c).

Thereafter, in a case the user selects the display window 630, the controller 180 displays all the messages included in the first slide. As a result, the user can easily distinguish the slides and grasp the content included in the slides even if several slides are prepared.

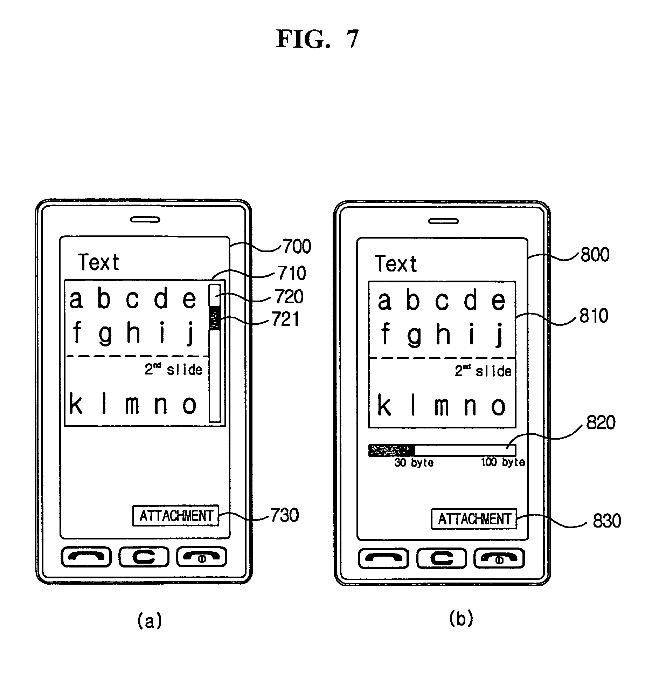

FIG.7 is a schematic image view illustrating a fourth exemplary embodiment according to a data attaching method in a mobile terminal of the present disclosure.

FIG.7a is an image illustrating a first modified exemplary embodiment of a text message input window 700. The text message input window 700 may include a text input window 710, a scroll bar 720, a scroll box 721 and an attachment icon 730. The scroll box 721 displays a relative position of the data currently displayed out of entire data, whereby the user uses the scroll bar 720 and the scroll box 721 to easily grasp and modify the position of the data that is displayed.

FIG.7a is an image view illustrating a second modified exemplary embodiment of a text message input window 800. The text message input window 800 may include a text input window 810, a progress bar 820 and an attachment icon 830. The progress bar 820 may display the capacity of messages that is inputted. That is, the '100 bytes' is a capacity of message that can be attached to one slide, and the '30 bytes' displays a capacity of message that is currently inputted. As a result, the user can easily grasp the position of the message that is inputted by the user and the capacity of message that is inputted.

The above-mentioned method for attaching data and mobile terminal thereof according to the present disclosure is not limited in its application, construction and arrangement of elements to the above-described embodiments. Rather, various changes and modifications are possible without departing from the principles set forth herein. All or part of each embodiment maybe selectively combined to carry out various alternate forms. Thus, it is intended that embodiments of the present disclosure may cover the modifications and variations of this disclosure provided they come within the scope of the appended claims and their equivalents.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

The above-described methods can be implemented in a program recorded medium as computer-readable codes. The computer-readable media may include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

## Claims

1. A method for attaching data to a mobile terminal, comprising: displaying a text message input window; generating a first slide and a second slide included with a text inputted through the text message input window; displaying data and selecting data to be attached to the first and second slides among the displayed data; and matching one by one to the first slide and the second slide according to an order of the selected data and automatically attaching the data.

2. The method of claim 1, wherein the step of generating the first slide and the second slide included with a text inputted through the text message input window comprises generating the first slide including a message inputted before the input of a generated signal and the second slide including a message to be inputted after the input of the generated signal in a case the generated signal for generating the second slide is inputted via a user input unit.

3. The method of claim 1, wherein the step of generating the first slide and the second slide included with a text inputted through the text message input window comprises: determining whether capacity of a message inputted through the text message input window has exceeded a predetermined capacity; and generating the first slide including a message within the predetermined capacity and the second slide including the message exceeding the predetermined capacity if it is determined that capacity of a message inputted through the text message input window has exceeded the predetermined capacity.

4. The method of claim 1, wherein the step of generating the first slide including a text inputted through the text message input window and the second slide comprises discriminatively displaying the first slide and the second slide.

5. The method of claim 4, wherein the step of discriminatively displaying the first slide and the second slide comprises using at least one of a text, a line, a figure and an icon and discriminatively displaying the first slide and the second slide.

6. The method of claim 4, wherein the step of discriminatively displaying the first slide and the second slide comprises displaying only part of the message included in the first slide.

7. The method of claim 4, wherein the step of discriminatively displaying the first slide and the second slide comprises: displaying a slide message for displaying the first slide and a display window including only part of the message included in the first slide; and displaying all messages included in the first slide in a case the display window is selected.

8. The method of claim 3, wherein the step of, in case the predetermined capacity is exceeded, generating the first slide including a message within the predetermined capacity and a second slide including the message exceeding the predetermined capacity comprises displaying on the text message input window a scroll bar for displaying a position of a message that is inputted and at least one of progressive bars for displaying capacity of message currently prepared out of a total message capacity.

9. The method of claim 1, further comprising changing an attached data in response to the changed signal and attaching the data, in a case the changed signal for changing the attached data is inputted.

10. A mobile terminal, comprising: a display unit configured to display a text message input window; and a controller configured to generate a first slide included with a text inputted through the text message input window and a second slide; and to automatically attach the text by matching one by one the text to the first slide and the second slide according to an order of selected data in a case the data is displayed and a data to be attached out of the displayed data is selected.

11. The mobile terminal of claim 10, wherein the controller generates the first slide including a message inputted before the generated signal is inputted and the second slide including a message to be inputted after the generated signal is inputted, in a case the generated signal for generating the second slide through the user input unit is inputted.

12. The mobile terminal of claim 10, wherein the controller determines whether capacity of a message inputted through the text message input window has exceeded a predetermined capacity and generates a first slide including a message within the predetermined capacity and a second slide including the message exceeding the predetermined capacity if it is determined that capacity of a message inputted through the text message input window has exceeded the predetermined capacity.

13. The mobile terminal of claim 10, wherein the controller displays only part of the messages included in the first slide.

14. The mobile terminal of claim 10, wherein the controller uses at least one of a text, a line, a figure and an icon and discriminatively displaying the first slide and the second slide.

15. The mobile terminal of claim 10, wherein the controller displays a slide message for displaying the first slide and a display window including only part of the message included in the first slide and displays all messages included in the first slide in a case the display window is selected.
